(19) Europäisches Patentamt / European Patent Office / Office européen des brevets

(11) **EP 4 773 400 A1**

(12) **EUROPEAN PATENT APPLICATION**
published in accordance with Art. 153(4) EPC

(43) Date of publication:
**08.07.2026 Bulletin 2026/28**

(21) Application number: **24889928.8**

(22) Date of filing: **06.03.2024**

(51) International Patent Classification (IPC):
**H01M 50/489** (2021.01)

(52) Cooperative Patent Classification (CPC):
**H01M 10/052; H01M 10/054; H01M 50/449;**
**H01M 50/489; H01M 50/491; H01M 50/494;**
**H01M 50/497;** Y02E 60/10

(86) International application number:
**PCT/CN2024/080330**

(87) International publication number:
**WO 2025/102554 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.11.2023 CN 202311510581**

(71) Applicant: **Contemporary Amperex Technology Co., Limited**
**Ningde, Fujian 352100 (CN)**

(72) Inventors:
• **ZHANG, Cuiping**
**Ningde, Fujian 352100 (CN)**
• **HAN, Changlong**
**Ningde, Fujian 352100 (CN)**

(74) Representative: **Ziebig Hengelhaupt Intellectual Property Attorneys Patentanwaltskanzlei PartGmbB**
**Leipziger Straße 49**
**10117 Berlin (DE)**

(54) **SECONDARY BATTERY AND ELECTRICAL APPARATUS**

(57) The present application provides a secondary battery and an electric apparatus. The secondary battery includes an electrolyte solution and a separator, the separator including a base film and a coating located on at least one side of the base film, where the secondary battery satisfies: $0.5 \leq G \times H/(10 \times \sigma) \leq 13$, G is a Gurley value of the base film, with a unit of s, H is a thickness of the coating, with a unit of $\mu m$, and $\sigma$ is an electrical conductivity of the electrolyte solution at 25 °C, with a unit of mS/cm. The secondary battery can achieve both safety and fast charging performance.

<u>**5**</u>

FIG. 1

EP 4 773 400 A1

**Description**

CROSS REFERENCE

The present application claims priority to Chinese Patent Application No. 202311510581.9 filed on November 14, 2023 and entitled "Secondary Battery and Electric Apparatus", which is incorporated herein by reference in its entirety.

TECHNICAL FIELD

The present application relates to the technical field of sodium batteries, and in particular, to a secondary battery and an electric apparatus.

BACKGROUND

Recently, a secondary battery is widely applied in an energy storage power system, such as a hydraulic, thermal, wind, or solar power plant, and the like, and the fields of a power tool, an electric bicycle, an electric motorcycle, an electric vehicle, military equipment, aerospace, and the like.

With the popularity of secondary batteries, consumers have an increasingly higher demand for safety and fast charging performance of secondary batteries. The improvement of the safety of the secondary battery may affect its fast charging performance, for example, the separator may block the contact between the positive electrode sheet and the negative electrode sheet to avoid the internal short circuit of the secondary battery, and the improvement of the tensile strength of the separator may improve the safety of the secondary battery, but the performance of active ions such as lithium ions and sodium ions passing through the separator will be reduced, resulting in a decrease of the fast charging performance of the secondary battery, and the safety and fast charging performance of the secondary battery cannot be taken into consideration, such that the application requirements of the new generation of electrochemical systems cannot be met.

SUMMARY

The present application has been made in view of the above problem, and an objective thereof is to provide a secondary battery which may take into consideration safety and fast charging performance.

A first aspect of the present application provides a secondary battery, including an electrolyte solution and a separator, the separator including a base film and a coating coated on at least one side of the base film;

The secondary battery satisfies: $0.5 \leq G \times H/(10 \times \sigma) \leq 13$, where G is a Gurley value of the base film, with a unit of s, H is a thickness of the coating, with a unit of $\mu$m, and $\sigma$ is an electrical conductivity of the electrolyte solution at 25°C, with a unit of mS/cm.

The increase of the Gurley value of the base film or the increase of the coating thickness of the base film is beneficial to improving the tensile resistance of the secondary battery, thereby improving the safety of the secondary battery, but the increase of the Gurley value of the base film or the increase of the coating thickness of the base film will also affect the active ion transport performance, and the increase of the electrical conductivity of the electrolyte solution may improve the ion transport performance of the secondary battery, but the increase of the electrical conductivity of the electrolyte solution will also bring potential safety hazards, which affects the safety. In the present application, by controlling the Gurley value of the base film, the thickness H of the coating layer and the electrical conductivity $\sigma$ of the electrolyte solution at 25°C to satisfy the above relational expression, the secondary battery may have good fast charging performance, and the safety hazard caused by the excessively high electrical conductivity of the electrolyte solution may be reduced, and the safety and fast charging performance of the secondary battery may be taken into account.

In any implementation, the secondary battery satisfies: $0.9 \leq G \times H/10 \times \sigma \leq 10$, which may not only take into consideration the safety and fast charging performance of the secondary battery, but also is beneficial to improving the cycle performance.

In any implementation, the secondary battery further satisfies: $6 \leq G/\sigma \leq 43$, optionally $11 \leq G/\sigma \leq 33$.

Controlling the Gurley value of the base film and the electrical conductivity $\sigma$ of the electrolyte solution at 25°C to satisfy the above relationship may simultaneously reduce the influence of the increase in the Gurley value of the base film on the ion transport performance of the secondary battery and the influence of the increase in the electrical conductivity of the electrolyte solution at 25°C on the safety of the secondary battery, thereby further comprehensively improving the safety and fast charging performances of the secondary battery.

In any implementation, the Gurley value G of the base film satisfies: $100s \leq G \leq 300s$, optionally $110s \leq G \leq 300s$.

Controlling the Gurley value of the base film within an appropriate range may not only reduce the risk of breakage during the production process of the separator or the risk of safety accidents during the recycling process of the separator caused by the too low tensile strength of the separator due to the too low Gurley value of the base film, but also reduce the influence of the too large Gurley value of the base film on the ion transport performance.

In any implementation of the present application, a thickness H of the coating satisfies: $0.5\mu m \leq H \leq 5.1\mu m$, optionally $0.8\mu m \leq H \leq 4.2\mu m$.

Controlling the thickness of the coating within an appropriate range not only helps to improve the safety of the secondary battery, but also may reduce the influence of an excessively high thickness of the coating on the ion transport performance.

In any implementation, the electrical conductivity $\sigma$ of the electrolyte solution at 25°C satisfies: $7mS/cm \leq \sigma \leq 15mS/cm$, optionally $8mS/cm \leq \sigma \leq 12.5mS/cm$.

Controlling the electrical conductivity of the electrolyte solution within an appropriate range at 25°C is not only beneficial to improving the ion transport performance of the secondary battery and improving the fast charging performance of the secondary battery, but also can reduce the influence of the increase of gas production caused by the excessive electrical conductivity of the electrolyte solution on the safety of the secondary battery.

In any implementation, a porosity of the separator is 30% to 50%, optionally, 35% to 50%. The porosity of the separator within an appropriate range may enable the active ions to have a good transmission rate, and enable the separator to have ideal mechanical strength, which takes into consideration both the fast charging performance and safety of the secondary battery.

In any implementation, the base film includes one or more of polyethylene, polypropylene, polyimide, polyamide, polyethylene terephthalate, glass fiber, and a non-woven fabric The above substances (or materials) have good tensile properties and air permeability after being prepared into the base film, and the Gurley value of the base film may be well controlled, such that the secondary battery has excellent safety.

In any implementation, the coating includes at least one of an organic coating and a ceramic coating.

In any implementation, the coating includes the organic coating and the ceramic coating, wherein the ceramic coating includes one or more of $Al_2O_3$, $AlO(OH)$, $SiO_2$, $TiO_2$, $MgO$, $CaO$, $ZnO_2$, $ZrO_2$, and $SnO_2$, and the organic coating includes one or more of ppolyvinylidene fluoride, a vinylidene fluoride-hexafluoropropylene polymer, a styrene-butadiene polymer, polyacrylic acid, styrene-butadiene rubber, sodium carboxymethyl cellulose, polyamide, polyacrylonitrile, polyacrylate ester, polyacrylate, and sodium hydroxymethyl cellulose.

The ceramic coating in the coating is beneficial to improving the tensile strength and puncture resistance of the separator, preventing the separator from shrinking or the active metal dendrite from piercing the separator to cause a short circuit, and improving the safety of the secondary battery; the organic coating has good thermal stability, and may improve the overall thermal stability of the separator, which further improves the safety performance of the secondary battery.

In any implementation, the coating comprises polyvinylidene fluoride (PVDF) accounting for 15% to 100% of the total mass of the coating layer or $Al_2O_3$ accounting for 55% to 100% of the total mass of the coating. The coating has good mechanical strength and thermal stability, which is beneficial to the safety of the secondary battery in long-term cycling.

In any implementation, the electrolyte solution includes a solvent, the solvent including one or more of a carbonate solvent, an ether solvent, and a linear carboxylate solvent, wherein

the carbonate solvent includes one or more of ethylene carbonate, dimethyl carbonate, propylene carbonate, ethyl methyl carbonate, fluoroethylene carbonate, and diethyl carbonate;

the ether solvent includes one or more of dioxolane, tetrahydrofuran, 2-methyltetrahydrofuran, tetrahydropyran, 1, 2-dimethoxyethane, diethylene glycol dimethyl ether, 1, 2-diethoxyethane, and 1, 2-dibutoxyethane; and

the linear carboxylate solvent includes one or more of methyl formate, ethyl formate, methyl propionate, ethyl propionate, propyl propionate, ethyl butyrate, methyl acetate, ethyl acetate, and propyl acetate.

The low viscosity of the solvent is beneficial to reducing the viscosity of the electrolyte solution and reduce the resistance of lithium ion transport, thereby improving the electrical conductivity of the electrolyte solution.

In any implementation, the secondary battery includes at least one of a sodium secondary battery and a lithium secondary battery.

A second aspect of the present application provides an electric apparatus including the secondary battery in the first aspect of the present application.

BRIEF DESCRIPTION OF THE DRAWINGS

FIG. 1 is a schematic diagram of a secondary battery according to an implementation of the present application;

FIG. 2 is an exploded view of the secondary battery according to an implementation of the present application shown in FIG. 1; and

FIG. 3 is a schematic diagram of a battery module according to an implementation of the present application;

FIG. 4 is a schematic diagram of a battery pack according to an implementation of the present application;

FIG. 5 is an exploded view of a battery pack according to an implementation of the present application shown in FIG. 4; and

FIG. 6 is a schematic diagram of an electric apparatus using a secondary battery as a power supply according to an implementation of the present application.

Description of reference signs:
1-Battery pack; 2-Upper case; 3-Lower case; 4-Battery module; 5-Secondary battery; 51-Housing; 52-Electrode assembly; 53-Cover plate.

DETAILED DESCRIPTION OF PREFERRED EMBODIMENTS

Hereinafter, embodiments specifically disclosing a secondary battery and an electric device in the present application are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in the present application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present application, unless otherwise specified, a numerical range "a-b" represents an abbreviated representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer $\geq 2$, it is equivalent to disclosing that the parameter is an integer such as 2, 3, 4, 5, 6, 7, 8, 9, 10, 11, or 12.

Unless otherwise specified, all implementations and optional implementations of the present application may be combined with each other to form new technical solutions.

Unless otherwise specified, all technical features and optional technical features of the present application can be combined with each other to form new technical solutions.

Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "include/comprise" and "contain" as mentioned in the present application are meant to be open or closed. For example, the "include/comprise" and "contain" may mean that other components not listed may be further included/comprised or contained, or only the listed components may be included/comprised or contained.

Unless otherwise specified, in the present application, the term "or" is inclusive. For example, the phrase "A or B" means "A, B, or both A and B". More specifically, the condition "A or B" is satisfied by any one of A being true (or present) and B being false (or absent), A being false (or absent) and B being true (or present), or both A and B being true (or present).

The separator in the secondary battery may block the contact between the positive electrode sheet and the negative electrode sheet, thereby avoiding the internal short circuit of the secondary battery, and the micropores in the separator can allow the active ions to pass through to make the secondary battery work normally. Generally, the higher the tensile resistance of the separator is, the safer the secondary battery is, but it will cause the active ions to have difficulty in passing through the separator, resulting in a decrease in ion transport performance and affecting the fast charging performance of the secondary battery. Therefore, there is a need to design a secondary battery that may take into consideration both the safety and fast charging performance, to meet application requirements of a new generation electrochemical system.

[Secondary Battery]

During cycling of the battery, active ions e.g., $Na^+$, $Li^+$ are deintercalated from the positive electrode sheet side of the secondary battery, transported through the electrolyte solution, and intercalated into the negative electrode sheet side through the separator, so the transport performance of the active ions in the electrolyte solution and the separator jointly affects the fast charging performance of the secondary battery.

The secondary battery provided by the present application includes an electrolyte solution and a separator, the separator including a base film and a coating located on at least one side of the base film, where the secondary battery satisfies: $0.5 \leq G \times H/(10 \times \sigma) \leq 13$, G is a Gurley value of the base film, with a unit of s, H is a thickness of the coating, with a unit of $\mu$m, and $\sigma$ is an electrical conductivity of the electrolyte solution at 25 °C, with a unit of mS/cm.

In the separator, the base film provides a channel through which active ions may pass, such that the secondary battery can work normally. Herein, the term "Gurley value" is used to characterize the air permeability of the base film, and refers to time required for 100 mL of air to pass through the base film having an area of 6.45 $cm^2$ under a pressure of 1.24 kPa. The Gurley value of the base film affects the tensile strength of the separator and the ease of penetration of active ions passing through the separator. The greater the Gurley value is, the higher the tensile strength of the separator is, but the lower the capability of active ions to pass through the base film, the ion transport performance is reduced, affecting the fast charging performance of the secondary battery.

The coating in the separator may improve the tensile strength of the separator, and may also improve the ability of the separator to be pierced by the active metal dendrite. However, the increase of the coating thickness will also increase the difficulty of active ions passing through the separator, which affects the ion transport performance and the fast charging performance of the secondary battery.

When passing through the separator, the active ions pass through the coating applied to the base film and the base film sequentially, and thus, the efficiency of the active ions passing through the separator or the ion transport performance is doubly affected by the Gurley value of the base film and the thickness of the coating.

The tensile strength of the separator may be enhanced by increasing the Gurley value of the base film and/or the thickness of the coating. In some implementations, the change of the tensile strength may be reflected by measuring the thermal shrinkage rate of the separator. Generally, the heat shrinkage rate of the separator may be reduced after the tensile strength is increased. Herein, the term "heat shrinkage rate" refers to the shrinkage rate of the area of the separator when heated to a set temperature. For example, the thermal shrinkage rate may be measured by a test method in which a separator having an area S1 is spread on a marble table, the temperature of a hot gun is adjusted to 200°C, then the separator is irradiated at a set distance for 0.5h, and after cooling, the area S2 of the separator is measured, and the thermal shrinkage rate of the separator=S2/S1×100%.

The thermal shrinkage rate of the separator may affect the thermal runaway temperature of the secondary battery, thereby affecting the safety of the secondary battery. The "thermal runaway temperature" refers to the temperature at which the cell of the secondary battery is subjected to thermal runaway, thermal runaway temperature may characterize the safety of the secondary battery.

When the secondary battery is heated to a certain temperature, the separator shrinks, and the separator with a great heat shrinkage rate cannot effectively separate the positive electrode sheet and the negative electrode sheet, and the positive and negative electrodes are in contact with each other to cause an internal short circuit, and the short circuit point generates heat, resulting in the burning of the electrode sheet and the ignition and explosion of the battery cell. A lower thermal shrinkage rate of the separator helps to increase the triggering temperature or thermal runaway temperature of the secondary battery, thereby improving the safety performance of the battery.

Herein, the thermal runaway temperature T may be measured by any known means. As an example, the thermal runaway temperature may be tested by the following method: At 25°C, the prepared battery is charged to 4.25 V at 1C of the battery cell, and then charged at a constant voltage of 4.25 V until the current drops to 0.05C, and then the battery is placed in a heating furnace, the furnace heats at 5 °C/min, and the temperature is heated to 100°C and maintained for 30 min, and then the temperature is maintained for 30 min every 10°C until the battery cell is thermally runaway, and the temperature T of the battery cell during thermal runaway is recorded.

Herein, the term "electrical conductivity" refers to the conduction ability of active ions in a liquid phase. The active ions move and transport in the electrolyte solution, the higher the electrical conductivity is, the higher the conductivity of the active ions in the electrolyte solution is, which is more conducive to the improvement of the fast charging performance of the secondary battery However, after the electrical conductivity is increased, the gas generated in the electrolyte solution due to the side reaction (such as an oxidation reaction) of the solvent is also increased correspondingly, which causes the secondary battery to have a gas expansion phenomenon, indirectly causes the active metal to precipitate locally in the secondary battery, and the active metal dendrite gradually grows and may puncture the separator, resulting in the safety risk of short circuit of the battery.

In addition, the detection temperature "25°C" in the "electrical conductivity of the electrolyte solution at 25°C" herein may have a fluctuation to an acceptable degree for those skilled in the art, for example, with a fluctuation range of $\pm 0.1°C$.

It may be understood that the effect of increasing the Gurley value of the base film and the coating thickness on the active ion transport performance is opposite to that of increasing the electrical conductivity of the electrolyte solution. Therefore, the ratio of $G \times H/(10 \times \sigma)$ may reflect the active ion transport performance in the secondary battery. A proper ratio helps the secondary battery to take into consideration the ion transport performance and the safety of the secondary battery.

In some implementations, the $G \times H/(10 \times \sigma)$ may optionally be 0.5, 1, 2, 3, 4, 5, 6, 7, 8, 9, 10, 11, 12, 13, or a value in a range consisting of any two of the above points.

Herein, the Gurley value G of the base film may be measured by any known means. For example, the Gurley value is tested with reference to the standard GB/T 36363-2018. As an example, a Gurley 4320N air permeability tester may be used.

In some implementations, the Gurley value of the base film may be measured using the following method: The base film is cut at intervals of 150 mm in the longitudinal direction (maximum dimension direction) into test samples with an area of 6.45 cm2. The test samples are placed in the air permeability tester. Time when 100 mL of air to pass through the base film under a pressure of 1.24 KPa is measured, which is the Gurley value.

The average value of the test results of a plurality of (e.g., 3) parallel samples may be taken as the Gurley value of the separator.

Herein, the thickness H of the coating may be measured by any known means. As an example, a Mall film thickness gauge is used for testing, the thickness H1 of the base film is measured first, and then the thickness H2 of the separator is measured, and the thickness H of the coating is H=H2-H1.

The average value of the coating thickness test results of a plurality of (e.g., 10) detection sites on the separator sample may be taken as the thickness of the coating.

Herein, the electrical conductivity $\sigma$ of the electrolyte solution at 25°C may be tested by any known means. As an example, the test method of the electrolyte solution may include: keeping the test sample and a standard liquid at a constant temperature of 25°C ($\pm 0.1°C$), calibrating a calibration detection instrument (Leonas DDSJ-308F) with two standard liquids at an ambient temperature of 25°C ($\pm 0.5°C$), after calibration is completed and the electrodes are cleaned, placing the test sample electrodes vertically into the test liquid to start the test, and recording the test result after the data is stable for 10s or more.

It may be understood that, in the present application, by controlling the Gurley value of the base film, the thickness H of the coating and the electrical conductivity $\sigma$ of the electrolyte solution at 25°C to satisfy the above relational expression, the separator has good tensile resistance and appropriate active ion penetration ability, which reduces the safety risk caused by high electrical conductivity; and moreover, the good electrical conductivity of the electrolyte solution improves the active ion transport performance and the fast charging performance of the secondary battery. The interaction and influence of the three factors make the secondary battery consider into consideration both safety and fast charging performance.

The Gurley value of the base film, the thickness H of the coating and the electrical conductivity $\sigma$ of the electrolyte solution at 25°C are further controlled to satisfy $0.9 \leq G \times H/10 \times \sigma \leq 10$, which not only may take into consideration the safety and fast charging performance of the secondary battery, but also is beneficial to improving the cycle performance.

In some implementations, the secondary battery further satisfies: $6 \leq G/\sigma \leq 43$. The ratio of the Gurley value of the base film to the electrical conductivity of the electrolyte solution within an appropriate range helps to control the active ions to have good transport performance, and reduces the influence of high conductivity values on the safety of the battery.

In some implementations, $G/\sigma$ may optionally be 6, 6.7, 7, 8, 8.3, 10, 12, 14, 15, 16, 18, 20, 22, 24, 25, 26, 28, 30, 32, 33, 34, 35, 36, 37.5, 38, 40, 42, or a value in a range formed by any two of the above points.

In some implementations, the ratio of the Gurley value of the base film to the electrical conductivity $\sigma$ of the electrolyte solution satisfies $11 \leq G/\sigma \leq 33$, controlling the ratio of the Gurley value of the base film to the electrical conductivity $\sigma$ of the electrolyte solution at 25°C within the range described above may simultaneously weaken the influence of the increase of the Gurley value of the base film on the ion transport performance of the secondary battery and the influence of the increase of the electrical conductivity of the electrolyte solution at 25°C on the safety of the secondary battery, and further improve the safety and fast charging performance of the secondary battery.

In some implementations, the Gurley value G of the base film satisfies: $100s \leq G \leq 300s$. In some implementations, the Gurley value G of the base film satisfies: 110s ≤G≤300s. In some implementations, the Gurley value G of the base film is optionally 100s, 110s, 120s, 140s, 150s, 160s, 180s, 200s, 210s, 220s, 240s, 250s, 260s, 280s, 300s, or a value in a range formed by any two of the above points.

Controlling the Gurley value of the base film within an appropriate range may not only reduce the risk of breakage during the production process of the separator or the risk of safety accidents during the recycling process of the separator caused by the too low tensile strength of the separator due to the too low Gurley value of the base film, but also reduce the influence of the too large Gurley value of the base film on the ion transport performance.

In some implementations, the thickness of the coating satisfies: $0.5\mu m \leq H \leq 5.1\mu m$. In some implementations, the thickness of the coating satisfies: $0.8\mu m \leq H \leq 4.2\mu m$. In some implementations, the thickness H of the coating is optionally $0.5\ \mu m$, $1\ \mu m$, $1.5\ \mu m$, $2\ \mu m$, $2.5\ \mu m$, $3\ \mu m$, $3.5\ \mu m$, $4\ \mu m$, $4.5\ \mu m$, $5\ \mu m$, or a value in a range formed by any two of the above points.

Controlling the thickness of the coating within an appropriate range not only helps to improve the safety of the secondary battery, but also may reduce the influence of an excessively high thickness of the coating on the ion transport performance.

In some implementations, the electrical conductivity $\sigma$ of the electrolyte solution at 25°C satisfies: 7mS/cm≤σ≤15mS/cm. In some implementations, the electrical conductivity $\sigma$ of the electrolyte solution at 25°C satisfies: 8mS/cm≤σ≤12.5mS/cm.

In some implementations, the electrical conductivity $\sigma$ of the electrolyte solution at 25°C may be selected as 7mS/cm, 8mS/cm, 9mS/cm, 10mS/cm, 11mS/cm, 12mS/cm, 13mS/cm, 14mS/cm, 15mS/cm, or a value in a range formed by any two of the above points.

Controlling the electrical conductivity of the electrolyte solution within an appropriate range at 25°C is not only beneficial to improving the ion transport performance of the secondary battery and improving the fast charging performance of the secondary battery, but also can reduce the influence of the increase of gas production caused by the excessive electrical conductivity of the electrolyte solution on the safety of the secondary battery.

The separator in the secondary battery has micropores that allow active ions to pass through, and isolates the positive electrode and the negative electrode to avoid an internal short circuit of the secondary battery and maintain normal operation of the secondary battery. In some implementations, the porosity of the separator is 35% to 50%. The porosity within the range helps to better improve the active ion transport performance and maintain the excellent mechanical performance of the separator.

In some implementations, the porosity of the separator is optionally 30%, 32%, 34%, 35%, 36%, 38%, 40%, 42%, 44%, 45%, 46%, 48%, 50%, or a value in a range formed by any two of the above points.

The porosity of the separator is within the range of 30% to 50%, such that the active ions can quickly pass through the separator, and the secondary battery has ideal rate performance; meanwhile, the separator also has good mechanical strength, which reduces the risk of breakage in the production or recycling process.

In some implementations, the base film includes one or more of polyethylene, polypropylene, polyimide, polyamide, polyethylene terephthalate, glass fiber, and a non-woven fabric, and optionally includes one or more of polyethylene and polypropylene.

In some implementations, the base film includes polyethylene. In some implementations, the base film includes polypropylene. In some implementations, the base film includes polyethylene and polypropylene.

The above substances (or materials) as the base film all have an appropriate Gurley value, and are widely available and cost-controllable, which helps to reduce the production cost of the secondary battery.

In some implementations, the coating includes an organic coating and/or a ceramic coating.

In some implementations, the ceramic coating includes one or more of $Al_2O_3$, $AlO(OH)$, $SiO_2$, $TiO_2$, MgO, CaO, $ZnO_2$, $ZrO_2$, and $SnO_2$. In some implementations, the ceramic coating includes $Al_2O_3$.

The ceramic coating is beneficial to improving the tensile strength and puncture resistance of the separator, preventing the separator from shrinking or the active metal dendrite from piercing the separator to cause a short circuit, thereby improving the safety of the secondary battery.

In some implementations, the organic coating includes one or more of polyvinylidene fluoride, a vinylidene fluoride-hexafluoropropylene polymer, a styrene-butadiene polymer, polyacrylic acid, styrene-butadiene rubber, sodium carboxymethyl cellulose, polyamide, polyacrylonitrile, polyacrylate ester, polyacrylate, and sodium hydroxymethyl cellulose. In some implementations, the organic coating includes polyvinylidene fluoride.

The organic coating has high thermal stability, may isolate the overall thermal stability of the separator, and further improves the safety performance of the battery.

In some implementations, the coating includes an organic coating and/or a ceramic coating. In some implementations, the coating is an organic coating. In some implementations, the coating is a flexible ceramic coating.

The coating includes PVDF accounting for 15% to 100% of the total mass of the coating layer or $Al_2O_3$ accounting for 55% to 100% of the total mass of the coating.

In some implementations, the coating includes PVDF accounting for 15% to 45% of the total mass of the coating

layer or $Al_2O_3$ accounting for 55% to 85% of the total mass of the coating.

The coating including the organic coating and the ceramic coating has good tensile resistance and thermal stability, and has both mechanical strength and thermal stability, which is beneficial to the safety of the secondary battery in long-term cycle.

The mass contents of PVDF and $Al_2O_3$ in the coating may be measured by any known or commonly used method in the art, for example, the content of PVDF may be measured by scraping the coating of the separator and weighing the coating to obtain the mass m1. The content of fluorine element W1% in the separator containing the coating is measured by surface element analysis (EDS), then the mass of fluorine element on the separator coating=m1×W1%, the mass of PVDF in the coating=m1×W1%/(fluorine atom amount/PVDF molecular weight), and the content of PVDF=W1%/(fluorine atom amount/PVDF molecular weight). The content of $Al_2O_3$ may be measured by the same method.

[Positive electrode sheet]

The positive electrode sheet includes a positive current collector and a positive electrode active material layer disposed on at least one surface of the positive current collector, and the positive electrode active material layer includes a positive electrode active material.

As an example, the positive current collector has two surfaces opposite to each other in its own thickness direction, and the positive electrode active material layer is disposed on either one or both of the two opposite surfaces of the positive current collector.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the positive electrode active material may be a positive electrode active material for a battery known in the art.

In some implementations, the positive electrode active material includes one or more of $Li_d[Ni_x Co_y X1_z M1_{1-x-y-z}]O_2$, $LiMn_2O_4$, $Li_2MnO_3$ $(1-a)LiAO_2$, and $LiM_2X_2O_4$;
where $0.1 \le d \le 1$, X1 includes Mn and/or Al; M1 includes one or more of Co, Ni, Mn, Mg, Cu, Zn, Al, Sn, B, Ga, Cr, Sr, V, and Ti, $0 \le x < 1$, $0 \le y \le 1$, $0 \le z \le 1$, $x+y+z \le 1$; A includes one or more of Ni, Co, and Mn, $0 < a < 1$; M2 includes one or more of Fe, Mn, Ni, and Co; X2 in $X2O_4^{h-}$ includes one or more of S, P, As, V, Mo, and W, and h=2 or 3.

The positive electrode active material in some implementations of the present application is not limited to the substances included by the above general formula, and other conventional materials that may be used as the positive active material for the battery may also be used. These positive pole active materials may be used alone or in combination of two or more thereof. The above general formula includes, but is not limited to, $LiCoO_2$, $LiNiO_2$, $LiMnO_2$, $LiMn_2O_4$, $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), $LiNi_{0.85}Co_{0.15}Al_{0.05}O_2$, for example, $LiFePO_4$ (also abbreviated as LFP), $LiMnPO_4$, a composite material of lithium manganese phosphate and carbon, lithium iron manganese phosphate or a composite material of lithium iron manganese phosphate and carbon.

In some implementations, the positive electrode material layer may be a positive electrode active material, which may be a positive electrode active material for a battery known in the art. As an example, the positive electrode active material may include at least one of the following materials: layered transition metal oxides, polyanionic compounds, or Prussian blue compounds. However, the present application is not limited to these materials, and other conventional materials that can be used as a positive active material of a battery may also be used. These positive pole active materials may be used alone or in combination of two or more thereof. The Prussian blue compound includes $Na_xP[R(CN)_6]_\Delta ZH_2O$, where the P and R are each independently selected from at least one of transition metal elements, $0 < x \le 2$, $0 < \delta \le 1$ and $0 \le z \le 0$; the polyanion compound includes $Na_bMe_c(PO_4)_dO_2X$, where Me includes one or more of Ti, Cr, Mn, Fe, Co, Ni, V, Cu and Zn; X includes one or more of F, Cl and Br, $0 < b \le 4$, $0 < c \le 2$, $1 \le d \le 3$; the general formula of the layered transition metal oxide is $Na_xMn_aFe_bNi_cM_dN_eO_{2-\delta}Q_f$, where M includes at least one of Ti, Li, V, Cr, Cu, Zn, Zr, Nb, Mo, Sn, Hf, Ta, Mg, and Al; N includes at least one of Si, P, B, S, and Se; Q includes at least one of F, Cl, and N, $0.66 \le x \le 1$, $0 < a \le 0.7$, $0 < b \le 0.7$, $0 \le c \le 0.23$, $0 \le d < 0.3$, $0 \le e \le 0.3$, $0 \le f \le 0.3$, $0 \le \delta \le 0.3$, $a+b+c+d+e=1$, $0 < e+f \le 0.3$, $0 < (e+f)/a \le 0.3$, $0.2 \le d+e+f \le 0.3$, $(b+c)/a \le 1.5$.

In some implementations, the positive electrode active material layer further optionally includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode sheet may be prepared by dispersing the above components for preparing a positive electrode sheet, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

[Negative electrode sheet]

The negative electrode sheet includes a negative electrode current collector and a negative electrode material layer located on at least one side of the negative electrode current collector and at least including a negative electrode active material.

As an example, the negative pole current collector has two surfaces opposite in its own thickness direction, and the negative pole film layer is disposed on either one or both of the two opposite surfaces of the negative pole current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some implementations, the negative electrode active material may be a negative electrode active material well-known in the art for batteries. These negative active materials may be used alone or in combination of two or more thereof.

In some implementations, the negative electrode active material includes one or more of synthetic graphite, natural graphite, soft carbon, hard carbon, a silicon-carbon composite, lithium titanate, and a silicon-oxygen composite.

In some implementations, the negative electrode active material layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methyl acrylic acid) (PMAA), and carboxymethyl chitosan (CMCS).

In some implementations, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode material layer further optionally includes other auxiliaries, for example, a thickener (such as sodium carboxymethyl cellulose (CMC-Na)).

In some embodiments, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

[Electrolyte]

The electrolyte functions to conduct ions between the positive electrode sheet and the negative electrode sheet. The type of the electrolyte is not specifically limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the electrolyte solution includes a sodium salt, and the sodium salt includes one or more of sodium hexafluorophosphate, sodium bisfluorosulfonylimide, sodium tetrafluoroborate, sodium perchlorate, sodium hexafluoroarsenate, sodium dioxalatoborate, and sodium difluorooxalatoborate.

In some implementations, the electrolyte solution includes a solvent, the solvent including one or more of a carbonate solvent, an ether solvent, and a carboxylate solvent, and optionally including one or more of a carbonate solvent and a linear carboxylate solvent.

In some implementations, the carbonate solvent includes one or more of ethylene carbonate, dimethyl carbonate, propylene carbonate, ethyl methyl carbonate, fluoroethylene carbonate, and diethyl carbonate.

In some implementations, the ether solvent includes one or more of dioxolane, tetrahydrofuran, 2-methylte-

**EP 4 773 400 A1**

trahydrofuran, tetrahydropyran, 1, 2-dimethoxyethane, diethylene glycol dimethyl ether, 1, 2-diethoxyethane, and 1, 2-dibutoxyethane.

In some implementations, the linear carboxylate solvent includes one or more of methyl formate, ethyl formate, methyl propionate, ethyl propionate, propyl propionate, ethyl butyrate, methyl acetate, ethyl acetate, and propyl acetate.

The solvent has a relatively low viscosity, and the viscosity of the electrolyte may be reduced after the electrolyte solution is added, thereby reducing the lithium ion transport resistance and improving the electrical conductivity of the electrolyte solution.

In some implementations, the electrolyte solution optionally further includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some implementations, the positive electrode sheet, the negative electrode sheet, and the separator may be manufactured into the electrode assembly through a winding process or a lamination process.

In some implementations, the secondary battery may include an outer package. The outer package may be used to encapsulate the electrode assembly and the electrolyte solution described above.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

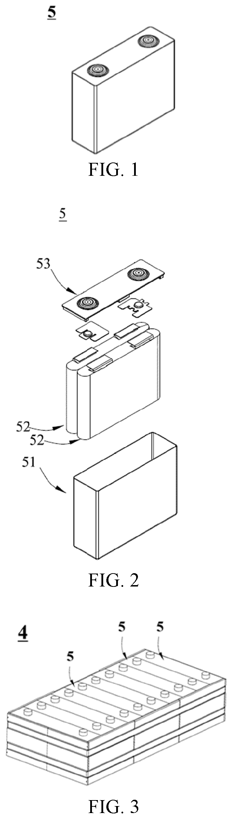

The shape of the secondary battery is not limited in this application, and may be a cylindrical shape, a square shape, or any other shape. For example, FIG. 1 shows a secondary battery 5 of a square structure as an example. The secondary battery may also be a sodium secondary battery or a lithium secondary battery.

In some implementations, referring to FIG. 2, the outer package may include a housing 51 and a cover plate 53. Wherein, the housing 51 may include a bottom plate and side plates connected to the bottom plate, and the bottom plate and the side plates define an accommodating chamber. The housing 51 is provided with an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the secondary battery 5, and the number may be selected by those skilled in the art according to specific practical requirements.

[Battery module]

In some implementations, the secondary batteries may be assembled into a battery module, and there may be one or a plurality of secondary batteries included in the battery module, and the specific number may be selected by those skilled in the art according to the application and capacity of the battery module.

FIG. 3 shows a battery module 4 as an example. Referring to FIG. 3, in the battery module 4, a plurality of secondary batteries 5 may be arranged in series in the longitudinal direction of the battery module 4. Certainly, the battery cells may alternatively be arranged in any other manner. Further, the plurality of secondary batteries 5 may be fixed by fasteners.

In some implementations, the battery module 4 may further include a housing with an accommodating space. The plurality of secondary batteries 5 are accommodated in the accommodating space.

[Battery pack]

In some implementations, the battery modules may be further assembled into a battery pack, and there may be one or a plurality of battery modules included in the battery pack, and the specific number may be selected by those skilled in the art according to the application and capacity of the battery pack.

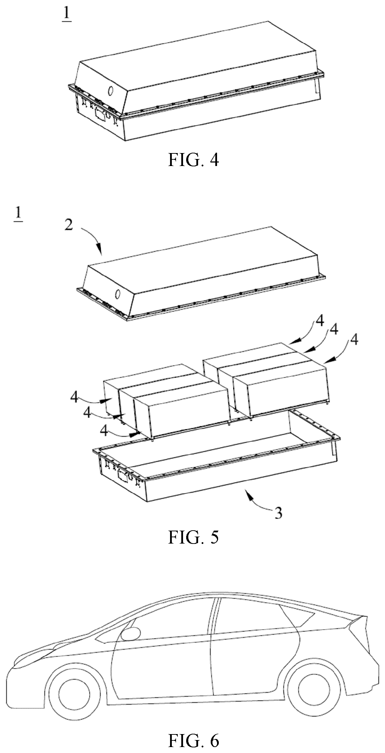

FIG. 4 and FIG. 5 show a battery pack 1 as an example. Referring to FIG. 4 and FIG. 5, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

[Electric apparatus]

In an implementation of the present application, further provided is an electric apparatus, including at least one of the secondary battery in some implementations, the battery module in some implementations, or the battery pack in some implementations.

The electric apparatus includes at least one of the secondary battery, the battery module, or the battery pack provided in the present application. The secondary battery, the battery module, or the battery pack may be used as a power supply for the electric device, or as an energy storage unit for the electric device. The electric apparatus may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

As an electric device, the secondary battery, the battery module, or the battery pack may be selected according to the use need.

FIG. 6 shows an electrical apparatus as an example. The electrical apparatus is a pure electric vehicle, a hybrid electric vehicle, a plug-in hybrid electric vehicle, or the like. In order to meet the demand for high power and high energy density of the secondary battery by the electrical apparatus, a battery pack or a battery module may be used.

In another example, the electrical apparatus may be a cell phone, a tablet computer, a notebook computer, or the like. This electrical apparatus is generally required to be thin and lightweight, and may use a secondary battery as a power supply.

Examples

Examples of the present application are described below. The examples described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

**I. Preparation Method**

**Example 1**

1) Separator

Polyethylene with the Gurley value of 160s was used as a base film (Hebei Jinli New Energy Technology Co., Ltd., SU07). 15g of $Al_2O_3$ was weighed and dissolved in a solvent 85g of N-methyl-2-pyrrolidone (NMP) to obtain a ceramic coating slurry. The ceramic coating slurry was coated on two opposite surfaces of the base film polyethylene by gravure coating to prepare a ceramic coating, the coating weight (based on the weight of $Al_2O_3$) was 2 $g/m^2$, and after coating, the coating was dried and slit to obtain a separator precursor.

10g of polyvinylidene fluoride (PVDF, weight average molecular weight of 500,000 to 800,000 g/mol) was weighed and dissolved in 90g of a solvent N-methyl-2-pyrrolidone obtain an organic coating slurry. The organic coating slurry was sprayed on two opposite surfaces of the separator precursor to prepare an organic coating, the coating weight (based on the weight of PVDF) was 0.5 $g/m^2$, and the organic coating was dried and slit after spraying to obtain a separator. In the separator coating, PVDF accounts for 20% of the mass of the coating, and $Al_2O_3$ accounts for 80% of the mass of the coating.

2) Electrolyte solution

In a glove box filled with argon (water content<10 ppm, oxygen content<1 ppm), ethylene carbonate and ethyl methyl carbonate (3:7) were mixed uniformly according to the weight ratio, and then $LiPF_6$ was slowly added, and after the lithium salt was completely dissolved, an electrolyte solution with a $LiPF_6$ concentration of 1 mol/L was obtained. The electrical conductivity of the electrolyte solution was 9.1 mS/cm.

3) Preparation of a positive electrode sheet

A positive electrode active material $LiNi_{0.5}Co_{0.2}Mn_{0.3}O_2$, a conductive agent Super P, a binder polyvinylidene fluoride were mixed according to a mass ratio of 8: 1: 1, a solvent N-methylpyrrolidone was added, and the mixture was uniformly mixed to obtain a positive electrode slurry with a solid content of 50 wt%. The positive electrode slurry was coated on a current collector aluminum foil and dried at 85°C, then cold pressed, trimmed, cut, and slit, and then dried under a vacuum condition at 85°C for 4 h to prepare the positive electrode sheet.

4) Preparation of a negative electrode sheet

A negative electrode active material graphite, a conductive agent Super P, a thickener CMC-Na, and a binder styrene-butadiene rubber (SBR) were mixed according to a mass ratio of 80: 15: 3: 2 and dissolved in deionized water to prepare the negative electrode slurry. A negative electrode slurry was obtained under the action of a vacuum stirrer, and the solid content in the negative electrode slurry was 30 wt%. The negative electrode slurry was coated on the copper foil as the current collector and dried at 85°C, then cold pressed, trimmed, cut, and slit, and then dried under vacuum conditions at 120°C for 12 h to produce a negative electrode sheet.

(5) Preparation of a battery

The positive electrode sheet, the separator, and the negative electrode sheet which were prepared were stacked in order such that the separator was located between the positive electrode sheet and the negative electrode sheet to play a role of separating the positive electrode sheet and the negative electrode sheet, and then the positive electrode sheet and the negative electrode sheet were wound to obtain a bare cell; a tab was welded; the bare cell was placed in an outer package; the above prepared electrolyte solution was injected into the dried cell, and the cell was subjected to packaging, standing, formation, shaping, capacity measurement and the like to obtain the lithium secondary battery in Example 1.

**Examples 2-20**

Examples 2-5 were respectively prepared by using polyethylene with the Gurley value of 100s as a base film (Hengchuan, 09LD), polyethylene with the Gurley value of 110s as a base film (Hebei Jinli New Energy Technology Co., Ltd., SU08), polyethylene with the Gurley value of 200s as a base film (Hebei Jinli New Energy Technology Co., Ltd., 10LD),and polyethylene with the Gurley value of 300s as a base film (Hebei Jinli New Energy Technology Co., Ltd., LP0700), and the remaining steps were similar to those in Example 1.

The preparation parameters of Examples 6-9 were similar to those of Example 1, but the coating weight of the coating was adjusted, specifically as follows:
In Example 6, the coating weight of the ceramic coating layer (based on the weight of $Al_2O_3$) was adjusted to 2.4 g/m$^2$, the coating weight of the organic coating layer (based on the weight of PVDF) was adjusted to 0.6 g/m$^2$; and in the separator coating layer, PVDF accounted for 40% of the mass of the coating layer, and $Al_2O_3$ accounted for 60% of the mass of the coating layer.

In Example 7, the coating weight of the ceramic coating layer (based on the weight of $Al_2O_3$) was adjusted to 2.2 g/m$^2$, the coating weight of the organic coating layer (based on the weight of PVDF) was adjusted to 0.5 g/m$^2$; and in the separator coating layer, PVDF accounted for 18.5% of the mass of the coating layer, and $Al_2O_3$ accounted for 81.5% of the mass of the coating layer.

In Example 8, the coating weight of the ceramic coating layer (based on the weight of $Al_2O_3$) was adjusted to 1 g/m$^2$, the coating weight of the organic coating layer (based on the weight of PVDF) was adjusted to 0.4 g/m$^2$; and in the separator coating layer, PVDF accounted for 28.6% of the mass of the coating layer, and $Al_2O_3$ accounted for 71.4% of the mass of the coating layer.

In Example 9, the coating weight of the ceramic coating layer (based on the weight of $Al_2O_3$) was adjusted to 0.5 g/m$^2$, the coating weight of the organic coating layer (based on the weight of PVDF) was adjusted to 0.4 g/m$^2$; and in the separator coating layer, PVDF accounted for 44.4% of the mass of the coating layer, and $Al_2O_3$ accounted for 55.6% of the mass of the coating layer.

In the Examples 10-13, the electrical conductivity of the electrolyte solution was adjusted by adjusting the ratio of ethylene carbonate to carboxylate, and the weight ratio of ethylene carbonate to ethyl formate was (25: 75), (30: 70), (40: 60) and (45: 55), respectively. The remaining preparation methods were similar to those in Example 1.

In Example 14, polyethylene with the Gurley value of 100s was used as the base film (Hengchuan, 09LD), and the volume ratio of ethylene carbonate to ethyl formate in the electrolyte solution was (43: 57), and the remaining steps were similar to those in Example 9.

In Example 15, polyethylene with the Gurley value of 210s was used as the base film (Hengchuan, LP0821), and the volume ratio of ethylene carbonate to ethyl formate in the electrolyte solution was (40: 60), and the remaining steps were similar to those in Example 6.

The preparation method of Example 16 was similar to that in Example 10, except that polyethylene with the Gurley value of 100s was used as the base film (Hengchuan, 09LD).

The preparation method of Example 17 was similar to that in Example 13, except that polyethylene with the Gurley value of 300s was used as the base film (Taizhou Hengchuan New Energy Materials Technology Co., Ltd., LP0700).

In Example 18, polypropylene with the Gurley value of 160s was used as the base film (Jinli SU07), and in Example 19, glass fiber with the Gurley value of 160s was used as the base film (Jinli, PU08), and the remaining steps were similar to those in Example 1.

The preparation method of the battery in Example 20 was similar to that in Example 1, except that:

2) Electrolyte solution
The electrolyte salt was $NaPF_6$.

3) Preparation of a positive electrode sheet
The positive electrode active material was $Na_{0.67}Ni_{0.33}Mn_{0.67}O_2$.

4) Preparation of a negative electrode sheet

A negative electrode active material hard carbon, a conductive agent Super P, a thickener CMC, and a binder styrene-butadiene rubber (SBR) were mixed according to a mass ratio of 80: 15: 3: 2 and dissolved in deionized water to prepare the negative electrode slurry. A negative electrode slurry was obtained under the action of a vacuum stirrer, and the solid content in the negative electrode slurry was 30 wt%. The negative electrode slurry was coated on the copper foil as the current collector and dried at 85°C, then cold pressed, trimmed, cut, and slit, and then dried under vacuum conditions at 120°C for 12 h to produce a negative electrode sheet.

**Comparative examples 1-4**

In Comparative Example 1, a secondary battery was prepared by using polyethylene with the Gurley value of 280s as the base film (Hengchuan SA31), and the ratio of ethylene carbonate to ethyl formate in the electrolyte solution was (43: 57), and the remaining steps were similar to those in Example 6.

In Comparative Example 2, a secondary battery was prepared by using polyethylene with the Gurley value of 100s as the base film (Hengchuan 09LD), and the ratio of ethylene carbonate to ethyl formate in the electrolyte solution was (25: 75), and the remaining steps were similar to those in Example 14.

The preparation methods in Comparative Examples 3-4 were similar to those in Comparative Examples 1-2, except that the positive electrode active material was adjusted to $Na_{0.67}Ni_{0.33}Mn_{0.67}O_2$.

Specific preparation parameters in Examples 1-20 and Comparative Examples 1-4 are shown in Table 1:

Table 1

| No. | Separator | | | | Electrolyte solution |
|---|---|---|---|---|---|
| | Base film | | Coating | Porosity | Electrical conductivity σ mS/cm |
| | Substance | Gurley value G/s | Thickness H/μm | | |
| Example 1 | Polyethylene | 160 | 2.9 | 40.10% | 9.1 |
| Example 2 | Polyethylene | 100 | 3 | 44.90% | 9.1 |
| Example 3 | Polyethylene | 110 | 2.8 | 43.70% | 9.1 |
| Example 4 | Polyethylene | 200 | 3.1 | 38.10% | 9.1 |
| Example 5 | Polyethylene | 300 | 3.2 | 32.00% | 9.1 |
| Example 6 | Polyethylene | 160 | 5.1 | 35.20% | 9.1 |
| Example 7 | Polyethylene | 160 | 4.2 | 37.00% | 9.1 |
| Example 8 | Polyethylene | 160 | 0.8 | 41.80% | 9.1 |
| Example 9 | Polyethylene | 160 | 0.5 | 45.80% | 9.1 |
| Example 10 | Polyethylene | 160 | 3 | 39.80% | 14.5 |
| Example 11 | Polyethylene | 160 | 3.2 | 39.90% | 12.2 |
| Example 12 | Polyethylene | 160 | 3.1 | 40.20% | 8.2 |

(continued)

| No. | Separator | | | | Electrolyte solution |
| --- | --- | --- | --- | --- | --- |
| | Base film | | Coating | Porosity | Electrical conductivity σ mS/cm |
| | Substance | Gurley value G/s | Thickness H/μm | | |
| Example 13 | Polyethylene | 160 | 2.9 | 40.30% | 7.2 |
| Example 14 | Polyethylene | 100 | 0.5 | 49.10% | 10 |
| Example 15 | Polyethylene | 210 | 4.9 | 31.20% | 8.2 |
| Example 16 | Polyethylene | 100 | 2.8 | 45.00% | 14.5 |
| Example 17 | Polyethylene | 300 | 3.1 | 32.20% | 7.2 |
| Example 18 | Polypropylene | 160 | 3 | 39.80% | 9.1 |
| Example 19 | Glass fiber | 160 | 3.1 | 39.60% | 9.1 |
| Example 20 | Polyethylene | 160 | 2.8 | 40.10% | 9.1 |
| Comparative Example 1 | Polyethylene | 280 | 5.1 | 29.60% | 10 |
| Comparative Example 2 | Polyethylene | 100 | 0.5 | 48.70% | 14.5 |
| Comparative Example 3 | Polyethylene | 280 | 4.9 | 31.10% | 10 |
| Comparative Example 4 | Polyethylene | 100 | 0.5 | 49.20% | 14.5 |

**II. Performance Test**

1. Separator

1) Test of Gurley value of the base film

A test was performed with reference to a standard GB/T 458-2008 and using a Gurley4320N air permeability tester. The base film was cut at intervals of 150 mm in the longitudinal direction (maximum dimension direction) into test samples with an area of 6.45 cm$^2$. The test samples were placed in the air permeability tester. Time when 100 mL of air to pass through the base film under a pressure of 1.21 KPa was measured, which was the Gurley value. The average value of the test results of 3 parallel samples was taken as the Gurley value of the separator.

2) Test of coating thickness

A Mall film thickness gauge (Germany MAHR, C1200) was used for testing, the thickness H1 of the base film was measured first, and then the thickness H2 of the separator was measured, and the thickness H of the coating was H=H2-H1. The average value of the coating thickness test results of 10 detection sites on the separator sample were taken as the thickness of the coating.

3) Test of porosity of the separator

The Gurley value was tested with reference to the standard GB/T 24586-2009.
The separator kneaded into a ball was inserted into a sample cup, the sample cup with the sample was placed in a true density tester (AccuPyc II 1340 type), the test system was sealed, helium gas was introduced according to the procedure, the pressure of the gas in the sample chamber and the expansion chamber was detected, and the true volume of the sample was calculated according to the Bohr's Law (PV=nRT). P represents the pressure, V represents the real volume, n represents the amount of material, T represents the absolute temperature, and R represents the gas constant.

$$Porosity\ P=(V2-V1)/V2\times100\%,$$

where

V1 represents the true volume (cm$^3$) of the sample obtained from the above test;

V2 represents the apparent volume (cm$^3$) of the sample, V2 = S×H×A, where:

S represents the area (cm$^2$) of the separator;

H represents the thickness (cm) of the separator; and

A represents the number of samples.

2. Electrolyte solution

1) Test of conductivity of an electrolyte solution

The test sample and a standard liquid was kept at a constant temperature of 25°C (±0.1°C), a calibration detection instrument (Leonas DDSJ-308F) was calibrated with two standard liquids at an ambient temperature of 25°C (±0.5°C), after calibration was completed and the electrodes were cleaned, the test sample electrodes were placed vertically into the test liquid to start the test, and the test result was recorded after the data was stable for 10s or more.

3. Battery

1) Test of cycle performance of the battery

The cycle performance test process was as follows: at 25°C, the prepared battery was charged to 4.25 V with a constant current of 1C, then charged at a constant voltage of 4.25 V until the current dropped to 0.05C, and left to stand for 5 min, and discharged to 2.8 V with a constant current of 1C. This is the first charge/discharge cycle of the battery, the discharge capacity of this cycle is recorded as the discharge capacity (C0) of the first cycle of the battery, 300 cycles are performed according to the above charge and discharge process, the discharge capacity of the 300 c1s is C1, and the cycle capacity retention rate of the battery cell=C0/C1×100%. The test processes of the Comparative Examples and other Examples are the same as above.

2. Test of fast charging performance of the battery

The fast charging performance test process was as follows: at 25°C, the prepared battery was charged to 4.25 V with a cell of 1C, then charged at a constant voltage of 4.25 V until the current dropped to 0.05C, then left to stand for 5 min, and then discharged to 2.8 V with a constant current of 1C, and the discharge capacity D0 was recorded. Subsequently, the prepared battery was charged to 4.25 V at 3C, then charged at a constant voltage of 4.25 V until the current dropped to 0.05C, and left to stand for 5 min, and then discharged to 2.8 V at a constant current of 1C, and the discharge capacity D1 was recorded. Fast charging capacity retention rate of the battery=D1/D0.

3) Test of safety performance of the battery

The safety performance test process was as follows: At 25°C, the prepared battery was charged to 4.25 V with a cell battery 1C, then charged at a constant voltage of 4.25 V until the current dropped to 0.05C, then the battery was placed in a heating furnace, the furnace was heated at 5°C/min, heated to 100°C and held for 30 min, and then heated to 10°C every time and held for 30 min until the cell thermal runaway, and the temperature T of the cell thermal runaway was recorded.

**III. Analysis of test results of Examples and Comparative examples**

The batteries in Examples and Comparative Examples were each prepared according to the above method, and the parameters were measured. The results are shown in Table 2 below.

Table 2

| No. | G×H/(10×σ) | G/σ | Cycle performance% | Fast charging performance% | Thermal runaway temperature/°C |
|---|---|---|---|---|---|
| Example 1 | 5.1 | 17.6 | 97.40% | 96.50% | 156 |

(continued)

| No. | G×H/(10×σ) | G/σ | Cycle performance% | Fast charging performance% | Thermal runaway temperature/°C |
|---|---|---|---|---|---|
| Example 2 | 3.3 | 11.0 | 96.10% | 97.20% | 154 |
| Example 3 | 3.4 | 12.1 | 96.20% | 96.80% | 153 |
| Example 4 | 6.8 | 22.0 | 97.60% | 96.30% | 159 |
| Example 5 | 10.5 | 33.0 | 94.50% | 91.00% | 126 |
| Example 6 | 9.0 | 17.6 | 94.60% | 94.00% | 144 |
| Example 7 | 7.4 | 17.6 | 97.30% | 96.20% | 154 |
| Example 8 | 1.4 | 17.6 | 95.20% | 94.90% | 150 |
| Example 9 | 0.9 | 17.6 | 92.60% | 92.90% | 142 |
| Example 10 | 3.3 | 11.0 | 96.20% | 95.10% | 152 |
| Example 11 | 4.2 | 13.1 | 96.70% | 96.60% | 154 |
| Example 12 | 6.0 | 19.5 | 97.40% | 96.30% | 155 |
| Example 13 | 6.4 | 22.2 | 97.50% | 96.40% | 155 |
| Example 14 | 0.5 | 10.0 | 90.40% | 91.20% | 128 |
| Example 15 | 12.5 | 25.6 | 93.60% | 93.00% | 136 |
| Example 16 | 1.9 | 6.9 | 94.00% | 93.30% | 139 |
| Example 17 | 12.9 | 41.7 | 90.60% | 90.40% | 130 |
| Example 18 | 5.3 | 17.6 | 97.50% | 96.50% | 157 |
| Example 19 | 5.5 | 17.6 | 97.80% | 96.60% | 157 |
| Example 20 | 4.9 | 17.6 | 94.50% | 93.30% | 156 |
| Comparative Example 1 | 14.3 | 28 | 83.20% | 81.60% | 124 |
| Comparative Example 2 | 0.3 | 6.9 | 81.20% | 79.30% | 120 |
| Comparative Example 3 | 13.7 | 28 | 83.00% | 78.90% | 123 |
| Comparative Example 4 | 0.3 | 6.9 | 81.10% | 79.00% | 117 |

It may be known from Examples 1-20 and Comparative Examples 1-4 that the secondary battery satisfies: $0.5 \leq G \times H/(10 \times \sigma) \leq 13$, which is beneficial to improving the fast charging performance, cycle performance and thermal runaway temperature of the secondary battery. The secondary battery prepared by the method may be applied to a lithium ion battery and a sodium ion battery.

It may be known from Examples 1 to 5 that the Gurley value G of the base film is controlled to satisfy 100s to 300s, and the secondary battery has excellent fast charging performance, cycle performance and thermal runaway temperature.

It may be known from Examples 6 to 9 that the thickness H of the coating is controlled to satisfy 0.5 $\mu$m to 5.1 $\mu$m, and the secondary battery has excellent fast charging performance and cycle performance and excellent thermal runaway temperature.

It may be known from Examples 10 to 13 that the conductivity $\sigma$ of the electrolyte solution at 25°C satisfies: 7mS/cm$\leq\sigma\leq$15mS/cm, and the secondary battery has excellent fast charging performance and cycle performance and excellent thermal runaway temperature.

It may be known from Examples 14 to 17 that when the ratio of G/$\sigma$ is in the range of 6.9 to 41.7, and the secondary battery has excellent fast charging performance and cycle performance and a good thermal runaway temperature.

It may be known from Examples 1 and 18 to 19 that the secondary battery prepared by using polyethylene, polypropylene or glass fiber as the base film in the present application has excellent fast charging performance and cycle performance and thermal runaway temperature.

It may be known from Examples 1 and 20 that for the lithium secondary battery or the sodium secondary battery, the secondary battery may have excellent fast charging performance and cycle performance and thermal runaway temperature by controlling the Gurley value G of the base film, the thickness H of the coating layer and the conductivity $\sigma$ of the electrolyte solution at 25°C to satisfy 0.5$\leq$G$\times$H/(10$\times\sigma$)$\leq$13.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the implementations without departing from the subject matter of the present application, and other implementations constructed by combining some of the constituent elements in the embodiments are also included in the scope of the present application.

**Claims**

1. A secondary battery, comprising an electrolyte solution and a separator, wherein the separator comprises a base film and a coating coated on at least one side of the base film; and
[0170]the secondary battery satisfies: $0.5 \leq G \times H/(10 \times \sigma) \leq 13$, where G is a Gurley value of the base film, with a unit of s, H is a thickness of the coating, with a unit of $\mu$m, and $\sigma$ is an electrical conductivity of the electrolyte solution at 25°C, with a unit of mS/cm.

2. The secondary battery according to claim 1, wherein the secondary battery satisfies:

$$0.9 \leq G \times H/(10 \times \sigma) \leq 10.$$

3. The secondary battery according to claim 1, wherein the secondary battery further satisfies:

$$6 \leq G/\sigma \leq 43.$$

4. The secondary battery according to claim 1, wherein the Gurley value G of the base film satisfies: $100s \leq G \leq 300s$.

5. The secondary battery according to claim 1, wherein the thickness H of the coating satisfies: $0.5\mu m \leq H \leq 5.1\mu m$.

6. The secondary battery according to claim 1, wherein the electrical conductivity $\sigma$ of the electrolyte solution is at 25°C satisfies: $7mS/cm \leq \sigma \leq 15mS/cm$.

7. The secondary battery according to any one of claims 1 to 6, wherein a porosity of the separator is 30% to 50%.

8. The secondary battery according to any one of claims 1 to 6, wherein the coating comprises at least one of an organic coating and a ceramic coating.

9. The secondary battery according to any one of claims 1 to 6, wherein the base film comprises one or more of polyethylene, polypropylene, polyimide, polyamide, polyethylene terephthalate, glass fiber, and a non-woven fabric.

10. The secondary battery according to claim 8, wherein the coating comprises the organic coating and the ceramic coating layer;

    the ceramic coating comprises one or more of $Al_2O_3$, $AlO(OH)$, $SiO_2$, $TiO_2$, $MgO$, $CaO$, $ZnO_2$, $ZrO_2$, and $SnO_2$; and
    [0171]the organic coating includes one or more of polyvinylidene fluoride, a vinylidene fluoride-hexafluoropropylene polymer, a styrene-butadiene polymer, polyacrylic acid, styrene-butadiene rubber, sodium carboxymethyl cellulose, polyamide, polyacrylonitrile, polyacrylate ester, polyacrylate, and sodium hydroxymethyl cellulose.

11. The secondary battery according to claim 10, wherein the coating comprises polyvinylidene fluoride accounting for 15% to 100% of the total mass of the coating layer or $Al_2O_3$ accounting for 55% to 100% of the total mass of the coating.

12. The secondary battery according to any one of claims 1 to 6, wherein the electrolyte solution further comprises a solvent, the solvent comprising one or more of a carbonate solvent, an ether solvent, and a linear carboxylate solvent;

the carbonate solvent comprises one or more of ethylene carbonate, dimethyl carbonate, propylene carbonate, ethyl methyl carbonate, fluoroethylene carbonate, and diethyl carbonate;
the ether solvent comprises one or more of dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane; and
the linear carboxylate solvent comprises one or more of methyl formate, ethyl formate, methyl propionate, ethyl propionate, propyl propionate, ethyl butyrate, methyl acetate, ethyl acetate, and propyl acetate.

13. The secondary battery according to any one of claims 1 to 6, wherein the secondary battery comprises at least one of a sodium secondary battery and a lithium secondary battery.

14. An electric apparatus, comprising the secondary battery according to any one of claims 1 to 13.

5

FIG. 1

5

53

52
52

51

FIG. 2

4

5

5

5

FIG. 3

1

FIG. 4

1

2

4 4 4

4

4

4

3

FIG. 5

FIG. 6

## INTERNATIONAL SEARCH REPORT

| International application No. |
| --- |
| **PCT/CN2024/080330** |

**A.    CLASSIFICATION OF SUBJECT MATTER**

H01M50/489(2021.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE, 百度, BAIDU: 二次电池, 基膜, 隔离膜, 涂层, 厚度, 透气, gurley, 电解液, 电导率, 安全, 快充, storage battery, base, film, membrane, isolation, coating, thickness, ventilate, electrolyte, safety, fast charge

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117239355 A (CONTEMPORARY AMPEREX TECHNOLOGY CO., LTD.) 15 December 2023 (2023-12-15)<br>claims 1-14 | 1-14 |
| A | WO 2023200106 A1 (SAMSUNG SDI CO., LTD.) 19 October 2023 (2023-10-19)<br>description, paragraphs [0026]-[0174], and figure 1 | 1-14 |
| A | CN 111785896 A (LI XIN) 16 October 2020 (2020-10-16)<br>entire document | 1-14 |
| A | US 2016204409 A1 (CELGARD, LLC) 14 July 2016 (2016-07-14)<br>entire document | 1-14 |
| A | US 2023127767 A1 (CONTEMPORARY AMPEREX TECHNOLOGY CO., LTD.) 27 April 2023 (2023-04-27)<br>entire document | 1-14 |
| A | WO 2023123423 A1 (SINOMA LITHIUM BATTERY SEPARATOR CO., LTD.) 06 July 2023 (2023-07-06)<br>entire document | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 July 2024** | **16 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

| International application No. |
|---|
| **PCT/CN2024/080330** |

| Patent document cited in search report | | | Publication date (day/month/year) | Patent family member(s) | | | Publication date (day/month/year) |
|---|---|---|---|---|---|---|---|
| CN | 117239355 | A | 15 December 2023 | None | | | |
| WO | 2023200106 | A1 | 19 October 2023 | KR | 20230148039 | A | 24 October 2023 |
| CN | 111785896 | A | 16 October 2020 | None | | | |
| US | 2016204409 | A1 | 14 July 2016 | JP | 2018500739 | A | 11 January 2018 |
| | | | | JP | 6847837 | B2 | 24 March 2021 |
| | | | | KR | 20170097210 | A | 25 August 2017 |
| | | | | KR | 102583612 | B1 | 04 October 2023 |
| | | | | WO | 2016109527 | A1 | 07 July 2016 |
| | | | | JP | 2021093374 | A | 17 June 2021 |
| | | | | JP | 2023030093 | A | 07 March 2023 |
| | | | | US | 2021083253 | A1 | 18 March 2021 |
| | | | | US | 11721872 | B2 | 08 August 2023 |
| | | | | US | 9985263 | B2 | 29 May 2018 |
| | | | | KR | 20230141925 | A | 10 October 2023 |
| | | | | KR | 102661503 | B1 | 26 April 2024 |
| | | | | US | 2022029245 | A1 | 27 January 2022 |
| | | | | US | 11990639 | B2 | 21 May 2024 |
| | | | | US | 2018254465 | A1 | 06 September 2018 |
| | | | | US | 10879514 | B2 | 29 December 2020 |
| US | 2023127767 | A1 | 27 April 2023 | KR | 20230025382 | A | 21 February 2023 |
| | | | | WO | 2023015521 | A1 | 16 February 2023 |
| | | | | JP | 2023539970 | A | 21 September 2023 |
| | | | | EP | 4160767 | A1 | 05 April 2023 |
| | | | | EP | 4160767 | A4 | 18 October 2023 |
| WO | 2023123423 | A1 | 06 July 2023 | JP | 2023554568 | A | 28 December 2023 |
| | | | | KR | 20230106147 | A | 12 July 2023 |
| | | | | KR | 102609392 | B1 | 01 December 2023 |
| | | | | EP | 4228018 | A1 | 16 August 2023 |
| | | | | ZA | 202307197 | B | 29 November 2023 |
| | | | | US | 2023246297 | A1 | 03 August 2023 |

Form PCT/ISA/210 (patent family annex) (July 2022)

**REFERENCES CITED IN THE DESCRIPTION**

**Patent documents cited in the description**

- CN 202311510581
- GB 363632018 T
- GB 4582008 T
- GB 245862009 T